# EUROPEAN PATENT APPLICATION

(11) **EP 4 613 112 A1**
(43) Date of publication of application: **10.09.2025**
(21) Application number: 24162337.0
(22) Date of filing: 08.03.2024
(51) Int. Cl.: A23N 12/10, A23F 5/04, A23N 12/12

(54) **THERMAL CONDUCTIVE DEVICE OF DRUM ROASTER**

(71) Applicant: Yu, Ching-Chuan, Taichung City 420 (TW)
(72) Inventor: YU, Ching-Chuan, 420 Taichung City (TW); YU, Chen-Wei, 420 Taichung City (TW)
(74) Representative: Cabinet Chaillot

(57) **Abstract**

A thermal conductive device (20) of a drum roaster is provided. A hot airflow flows to airflow outlets through airflow inlets while a heating device works. A plurality fluxes of airflow heat is formed by the hot airflow flowing into a roasting space through a plurality of air-deflecting fins (21) while a physical thermal conduction is generated between inner (10) and outer (30) drums due to thermal conductive metals of the air-deflecting fins. When the airflow heat is hotter than the physical thermal conduction, the airflow heat is used for compensation of temperature of the physical thermal conduction. On the other hand, the physical thermal conduction is used for compensation of temperature of the airflow heat when the physical thermal conduction is hotter than the airflow heat. Thereby constant temperature, energy saving, uniform temperature, and heat retention are achieved and coffee beans obtain thermal energy more stably during roasting process.

## Description

### FIELD OF THE INVENTION

The present invention relates to a drum roaster, especially to a drum roaster with a thermal conductive device.

### BACKGROUND OF THE INVENTION

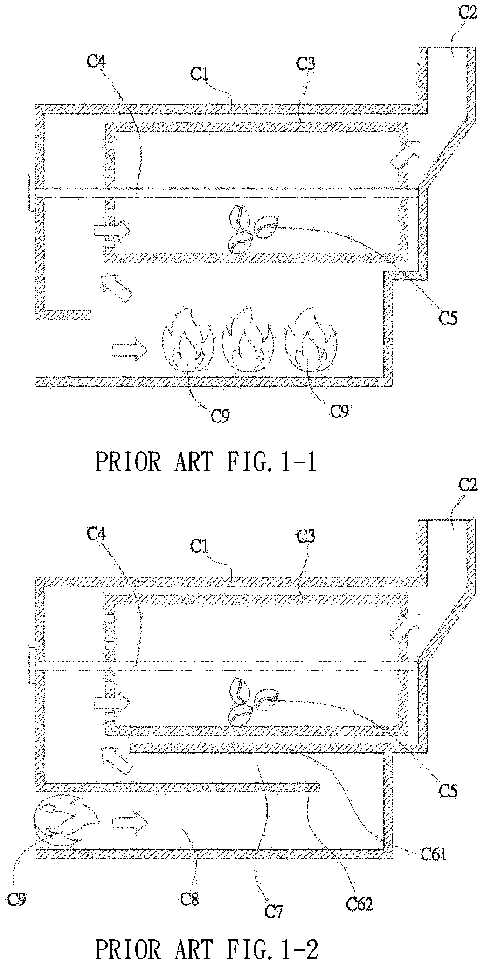

Generally, coffee beans are roasted before being ground into edible powder for brewing. During roasting process, green coffee beans are heated, expanded, and become darkened to bring out their special aroma. A sufficient amount of heat is required to accelerate chemical reactions which can add flavor. Refer to Fig. 1-1, a conventional half hot air roaster includes an oven C1, a heat output end C2 disposed one end of the oven C1, a rotary cylinder C3 arranged inside the oven C1 and rotated by a shaft C4, a plurality of coffee beans C5 mounted inside the rotary cylinder C3, and a heat source C9 directly mounted under a bottom of the rotary cylinder C3. Although the roaster with the above structure has advantages of faster heating, the following shortcomings still exist. Firstly, a temperature of hot air is not uniform so that the coffee beans don't have their corresponding aroma and taste after roasting. Next the temperature of the rotary cylinder is too high so that the skin of coffee beans is burned and the roasted coffee beans have a charred taste.

Refer to Fig. 1-2, a conventional hot air roaster consists of an oven C1, a heat output end C2 disposed one end of the oven C1, a rotary cylinder C3 arranged inside the oven C1 and rotated by a shaft C4, a plurality of coffee beans C5 mounted inside the rotary cylinder C3, an inner baffle C61 and an outer baffle C62 mounted under a bottom of the rotary cylinder C3, a channel C7 formed between the oven C1 and the inner baffle C61/outer baffle C62, a heat input end C8 formed at a bottom of the channel C7, and a heat source C9 arranged at one side of the heat input end C8. Compared with the roaster shown in Fig. 1-1, a temperature of hot air in the roaster shown in Fig. 1-2 is more stable. Yet a layered structure of the inner baffle C61 and the outer baffle C62 results in insufficient heat and slow heating. Moreover, owing to a fixed structure of the inner baffle C61 and the outer baffle C62, there is no direct thermal conduction between the heat source C9 and the coffee beans C5 through the oven C1 and heat is delivered to the rotary cylinder C3 only under guidance of the channel C7. A part of heat is lost during thermal conduction through the inner baffle C61 and the outer baffle C62. Thus more energy is wasted.

### SUMMARY OF THE INVENTION

Therefore, it is a primary object of the present invention to provide a thermal conductive device of a drum roaster which overcomes shortcomings of conventional structure caused by the fixed inner and outer baffles and provides functions of constant temperature, energy saving, uniform temperature, and heat retention. Since the inner and outer baffles are unable to rotate, hot airflow generated is unable to flow longer in the drum and this has negative effect on temperature control.

In order to achieve the above objects, a thermal conductive device of a drum roaster according to the present invention includes an inner drum, a thermal conductive unit, an outer drum, and a stirring unit. A roasting space is formed inside the inner drum. The thermal conductive unit is formed by a plurality of circularly-arranged air-deflecting fins which is distributed and connected with an outer wall surface of the inner drum and an inner peripheral surface of the outer drum. The air-deflecting fins are made of thermal conductive metals. One end of the outer drum is an open end provided with a mounting space and the other end of the outer drum is a closed end. A hole is mounted at a center of the closed end. An inner cylindrical wall of the open mounting space is covering and connected with the thermal conductive unit. A front end of the inner drum is projecting from the open end of the outer drum to form an extension segment while a flow-back space is formed at the closed end on the other end of the outer drum with respect to the inner drum and the thermal conductive unit. A plurality of circularly-arranged hot airflow inlets is formed among one end of the air-deflecting fins of the thermal conductive unit corresponding to the extension segment, the inner drum, and the outer drum. A plurality of circularly-arranged hot airflow outlets is formed among the other end of the air-deflecting fins of the thermal conductive unit opposite to the end with the airflow inlets, the inner drum, and the outer drum. The stirring unit includes a driving shaft, a driving end disposed on one end of the driving shaft, an axially-rotating end arranged at the other end of the driving shaft, a plurality of radial fixing members disposed around the driving shaft, and a plurality of stirring pieces formed between the adjacent radial fixing members. The driving end is axially mounted in the hole of the outer drum and a rear end of each of the radial fixing members is fixed on an inner wall surface of the inner drum.

While being heated by the heating device, the hot airflow is flowing to the airflow outlets through the airflow inlets and entering into the roasting space through the plurality of the air-deflecting fins to form fluxes of airflow heat. A physical thermal conduction is generated between the inner drum and the outer drum due to the thermal conductive metals of the air-deflecting fins. When the airflow heat is hotter than the physical thermal conduction, the airflow heat is used for compensation of temperature of the physical thermal conduction. On the other hand, the physical thermal conduction is used for compensation of temperature of the airflow heat when the physical thermal conduction is hotter than the airflow heat. Thereby the physical thermal conduction and the airflow heat can compensate each other's temperature to achieve constant temperature, energy saving, uniform temperature, and heat retention. Therefore, coffee beans roasted obtain thermal energy more stably during roasting process and have better quality.

### BRIEF DESCRIPTION OF THE DRAWINGS

Fig. 1-1 is a sectional view of a conventional half hot air drum roaster;
Fig. 1-2 is a sectional view of a conventional hot air drum roaster;
Fig. 2 is a perspective view of an embodiment of a thermal conductive device of a drum roaster according to the present invention;
Fig. 3 is a perspective view of a roasting drum of an embodiment according to the present invention;
Fig. 4 is an exploded view of a roasting drum of an embodiment according to the present invention;
Fig. 5 is a partial section view of a roasting drum of an embodiment according to the present invention;
Fig. 6 is a front view of a roasting drum of an embodiment according to the present invention;
Fig. 7 is a sectional view of an embodiment of a thermal conductive device of a drum roaster in use according to the present invention.

### DETAILED DESCRIPTION OF THE PREFERRED EMBODIMENTS

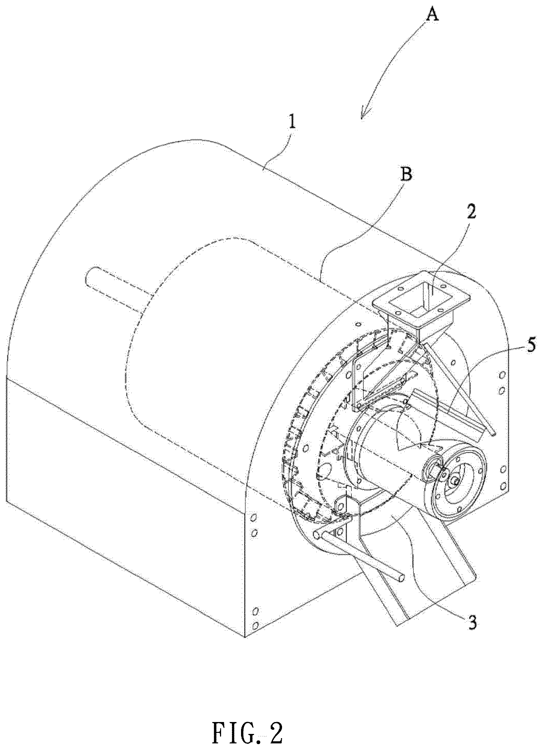

Refer to Fig. 2-7, a thermal conductive device of a drum roaster according to the present invention includes a roaster A and a roasting drum B.

The roaster A consists of a housing 1, a feed inlet 2 and a discharge outlet 3 both disposed on a preset position of a front end of the housing 1, a heating device 4 arranged at an inner bottom surface of the housing 1, and a damper 5 mounted to one end of the roaster A and connected to an exhaust fan (not shown in figures). A negative pressure is created in the housing 1 by the damper 5 and then a flowing hot air flow N with negative pressure is formed inside the housing 1 by the heating device 4.

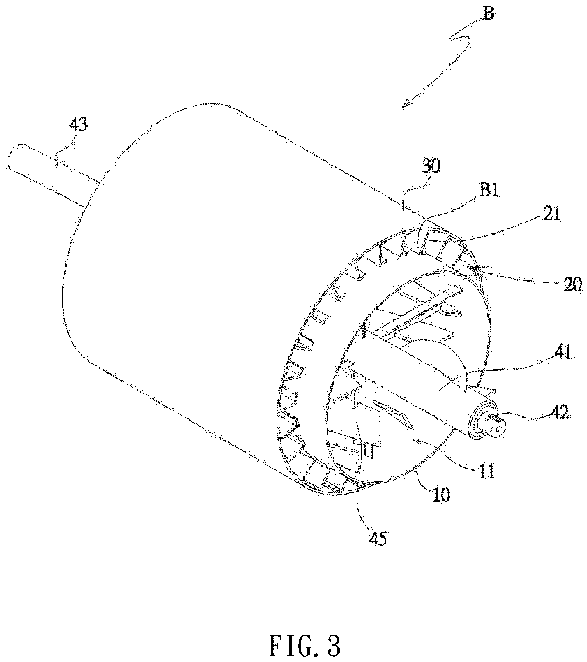

As shown in Fig. 2 and Fig. 3, the roasting drum B is composed of an inner drum 10, a thermal conductive unit 20, an outer drum 30, and a stirring unit 40. The roasting drum B is mounted inside the housing 1 of the roaster A and having a front end a rear end pivotally connected with the housing 1. A bottom of the roasting drum B is corresponding to the heating device 4 while the front end of the roasting drum B is corresponding to the feed inlet 2 and the discharge outlet 3.

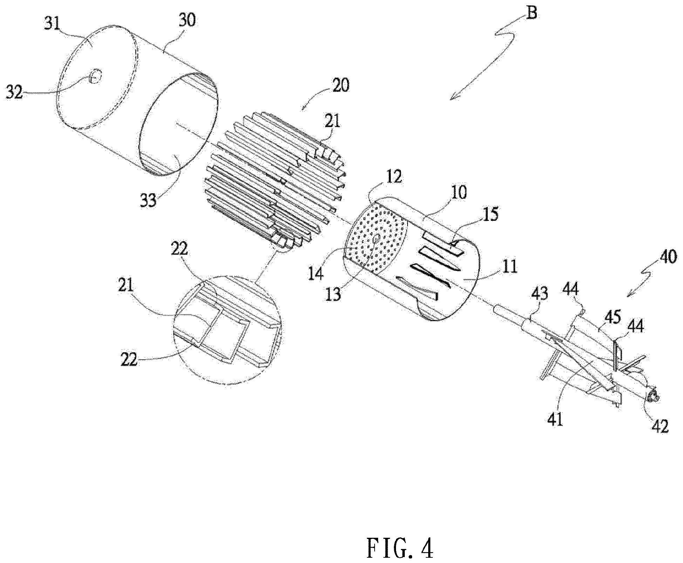

As shown in Fig. 4, a roasting space 11 is formed inside the inner drum 10 and a meshed plate 12 is disposed on a rear end of the inner drum 10. The meshed plate 12 is provided with a plurality of meshes 14 and an axle hole 13 formed on a center of the meshed plate 12. The meshed plate 12 is used to prevent coffee beans from coming out of the inner drum 10 during rotation.

The thermal conductive unit 20 is formed by a plurality of circularly-arranged air-deflecting fins 21 which is distributed evenly and connected with an outer wall surface of the inner drum 10 and an inner peripheral surface of the outer drum 30. The air-deflecting fins 21 are made of thermal conductive metals. Both a top edge and a bottom edge of the respective air-deflecting fins 21 are bent to form a connection edge 22 for connection with the inner peripheral surface of the outer drum 30 and the outer wall surface of the inner drum 10 correspondingly. The connection way can be welding. Or the thermal conductive unit 20 and the outer drum 30 are integrally formed into one piece.

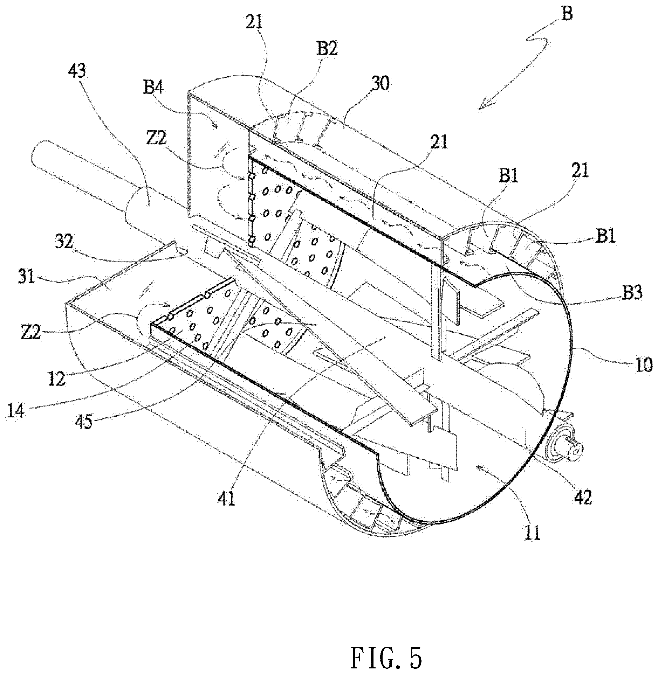

One end of the outer drum 30 is an open end provided with an open mounting space 33 while the other end of the outer drum 30 is a closed end 31 provided with a hole 32 at a center. An inner cylindrical wall of the open mounting space 33 is covering and connected with the thermal conductive unit 20. The covering and connection is achieved by welding, but not limited. Or the thermal conductive unit 20 and the outer drum 30 are integrally formed into one piece. A front end of the inner drum 10 is projecting from the open end of the outer drum 30 to form an extension segment B3, as shown in Fig. 5 while a flow-back space B4 is formed at the closed end 31 on the other end of the outer drum 30 with respect to the inner drum 10 and the thermal conductive unit 20. A plurality of circularly-arranged hot airflow inlets B1 is formed among one end of the air-deflecting fins 21 of the thermal conductive unit 20 corresponding to the extension segment B3, the inner drum 10, and the outer drum 30 while a plurality of circularly-arranged hot airflow outlets B2 is formed among the other end of the air-deflecting fins 21 of the thermal conductive unit 20 opposite to the end with the airflow inlets B1, the inner drum 10, and the outer drum 30.

A driving shaft 41 is inserted through and mounted in the axle hole 13 of the inner drum 10 and the hole 32 of the outer drum 30 so that the inner drum 10 and the outer drum 30 are rotated synchronously by the driving shaft 41. The insertion and mounting of the driving shaft 41 are achieved by welding or threaded fastening.

Refer to Fig, 4-6, the stirring unit 40 includes a driving end 43 disposed on one end of the driving shaft 41, an axially-rotating end 42 arranged at the other end of the driving shaft 41, a plurality of radial fixing members 44 disposed around the driving shaft 41, and a plurality of stirring pieces 45 formed between the adjacent radial fixing members 44. The driving end 43 is axially mounted in the hole 32 of the outer drum 30 and a rear end of each of the radial fixing members 44 is fixed on an inner wall surface of the inner drum 10. The stirring unit 40 is used for stirring coffee beans.

In a preferred embodiment, both the inner drum 10 and the outer drum 30 are made of thermal conductive metals.

In a preferred embodiment, the air-deflecting fins 21 of the thermal conductive unit 20 are straight fins, tilt fins, or spiral fins disposed circumferentially.

In a preferred embodiment, a plurality of picking pieces 15 is circumferentially attached to the inner wall surface of the inner drum 10.

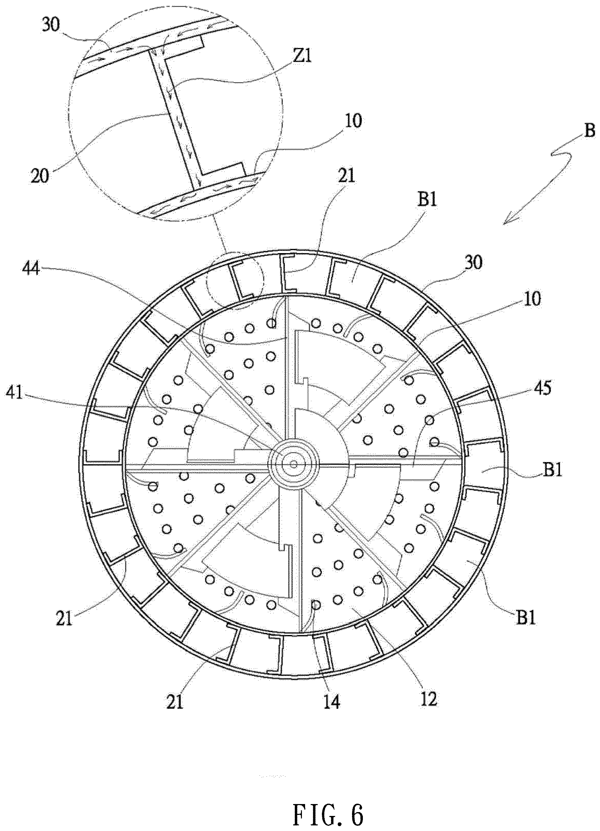

As shown in Fig. 5, a use of the plurality of the airflow inlets B1 and the airflow outlets B2 formed among the air-deflecting fins 21, the inner drum 10, and the outer drum 30 is described below. A hot airflow N from the heating device 4 is impeded by the extension segment B3, then flowing to the airflow outlets B2 through the airflow inlets B1 to form a flux of airflow heat Z2 between the inner drum 10 and the outer drum 30. Also refer to Fig. 6, a physical thermal conduction Z1 is generated between the inner drum 10 and the outer drum 30 due to the thermal conductive metals of which the air-deflecting fins 21 are made. When a temperature of the airflow heat Z2 is larger than that of the physical thermal conduction Z1, the airflow heat Z2 is used for compensation of the temperature of the physical thermal conduction Z1. On the other hand, the physical thermal conduction Z1 is used for compensation of the temperature of the airflow heat Z2 when the temperature of the physical thermal conduction Z1 is larger than that of the airflow heat Z2. Thereby the physical thermal conduction Z1 and the airflow heat Z2 can compensate each other's temperature.

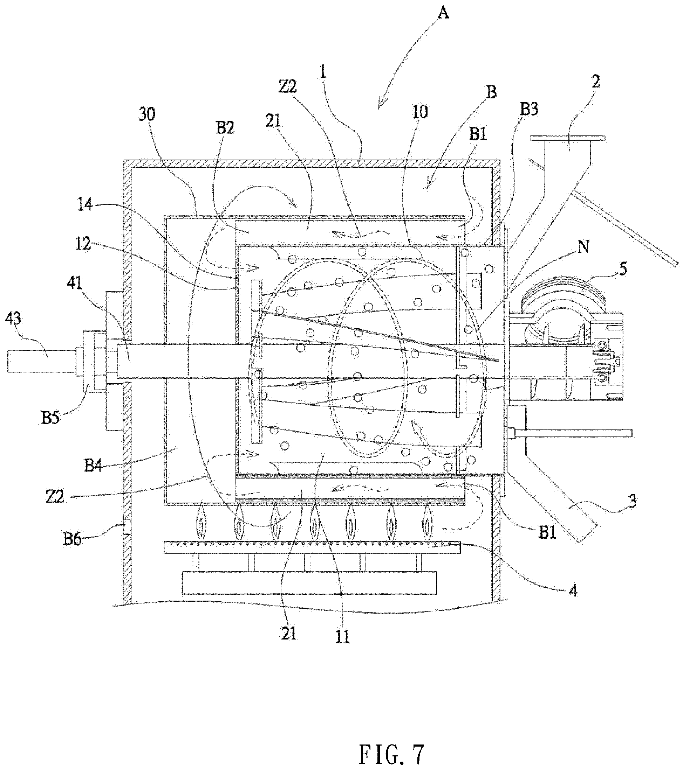

As shown in Fig. 7, the hot airflow N is flowing to the airflow outlets B2 through the airflow inlets B1 when the heating device 4 works. The functions of constant temperature, energy saving, uniform temperature, and heat retention are provided due to a longer path of the hot airflow N in the drum. Therefore, the coffee beans obtain thermal energy more stably during the roasting process.

In a preferred embodiment, the housing 1 is provided with an air inlet B6 corresponding to the heating device 4 for providing oxygen the heating device 4 required. A bearing B5 is disposed on a rear surface of the housing 1 and located axially corresponding to the driving shaft 41.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A thermal conductive device of a drum roaster comprising:
a roasting drum including an inner drum, a thermal conductive unit,
an outer drum, and a driving shaft;
wherein the inner drum includes a roasting space formed therein and a meshed plate; the meshed plate is disposed on a rear end of the inner drum and provided with a plurality of meshes and an axle hole formed on a center of the meshed plate;
wherein the thermal conductive unit is formed by a plurality of circularly-arranged air-deflecting fins which is distributed evenly and
connected with an outer wall surface of the inner drum and an inner peripheral surface of the outer drum; wherein the air-deflecting fins are made of thermal conductive metals;
wherein one end of the outer drum is an open end provided with a mounting space and the other end of the outer drum is a closed end provided with a hole at a center; an inner cylindrical wall of the open mounting space is covering and connected with the thermal conductive unit; a front end of the inner drum is projecting from the open end of the outer drum to form an extension segment while a flow-back space is formed at the closed end on the other end of the outer drum with respect to the inner drum and the thermal conductive unit; a plurality of circularly-arranged hot airflow inlets is formed among one end of the air-deflecting fins of the thermal conductive unit corresponding to the extension segment, the inner drum, and the outer drum; a plurality of circularly-arranged hot airflow outlets is formed among the other end of the air-deflecting fins of the thermal conductive unit opposite to the end with the airflow inlets, the inner drum, and the outer drum; and
the driving shaft is inserted through and mounted in the axle hole of the inner drum and the hole of the outer drum so that the inner drum and the outer drum are rotated synchronously by the driving shaft.

2. The thermal conductive device of the drum roaster as claimed in claim 1, wherein both a top edge and a bottom edge of each of the respective air-deflecting fins are bent to form a connection edge for connection with the inner peripheral surface of the outer drum and the outer wall surface of the inner drum correspondingly.

3. The thermal conductive device of the drum roaster as claimed in claim 1, wherein the roasting drum is pivotally connected with a housing and a heating device is mounted in the housing and corresponding to a bottom of the roasting drum; a feed inlet and a discharge outlet are disposed on preset positions of the housing and corresponding to a front end of the roasting drum.

4. The thermal conductive device of the drum roaster as claimed in claim 1, wherein the roasting drum further includes a stirring unit; the stirring unit is provided with a driving end disposed on one end of the driving shaft, an axially-rotating end arranged at the other end of the driving shaft, a plurality of radial fixing members disposed around the driving shaft, and a plurality of stirring pieces formed between the adjacent radial fixing members; the driving end is axially mounted in the hole of the outer drum and a rear end of each of the radial fixing members is fixed on an inner wall surface of the inner drum.

5. The thermal conductive device of the drum roaster as claimed in claim 1, wherein the air-deflecting fins of the thermal conductive unit are straight fins, tilt fins, or spiral fins disposed circumferentially.

6. The thermal conductive device of the drum roaster as claimed in claim 1, wherein a plurality of picking pieces is circumferentially mounted to an inner wall surface of the inner drum.

## Amended claims

### Amended claims in accordance with Rule 137(2) EPC.

1. A thermal conductive device of a drum roaster comprising:
a roasting drum (B) including an inner drum (10), a thermal
conductive unit (20), an outer drum (30), and a driving shaft (41);
**characterized in that** the inner drum (10) includes a roasting space (11) formed therein and a meshed plate (12); the meshed plate (12) is disposed on a rear end of the inner drum (10) and provided with a plurality of meshes (14) and an axle hole (13) formed on a center of the meshed plate (12);
wherein the thermal conductive unit (20) is formed by a plurality of circularly-arranged air-deflecting fins (21) which are_distributed evenly and connected with an outer wall surface of the inner drum (10) and an inner peripheral surface of the outer drum (30); wherein the air-deflecting fins (21) are made of thermal conductive metals;
wherein one end of the outer drum (30) is an open end provided with a mounting space (33) and the other end of the outer drum (30) is a closed end provided with a hole (32) at a center; an inner cylindrical wall of the open mounting space (33) is covering and connected with the thermal conductive unit (20); a front end of the inner drum (10) is projecting from the open end of the outer drum (30) to form an extension segment (B3) while a flow-back space (B4) is formed at the closed end on the other end of the outer drum (30) with respect to the inner drum (10) and the thermal conductive unit (20); a plurality of circularly-arranged hot airflow inlets (B1) is formed among one end of the air-deflecting fins (21) of the thermal conductive unit (20) corresponding to the extension segment (B3), the inner drum (10), and
the outer drum (30); a plurality of circularly-arranged hot airflow outlets (B1) is formed among the other end of the air-deflecting fins (21) of the thermal conductive unit (20) opposite to the end with the airflow inlets (B1), the inner drum (10), and the outer drum (30); and
the driving shaft (41) is inserted through and mounted in the axle hole (13) of the inner drum (10) and the hole (32) of the outer drum (30) so that the inner drum (10) and the outer drum (30) are rotated synchronously by the driving shaft (41).

2. The thermal conductive device of the drum roaster as claimed in claim 1, wherein both a top edge and a bottom edge of each of the respective air-deflecting fins (21) are bent to form a connection edge (22) for connection with the inner peripheral surface of the outer drum (30) and the outer wall surface of the inner drum (10) correspondingly.

3. The thermal conductive device of the drum roaster as claimed in claim 1, wherein the roasting drum (B) is pivotally connected with a housing (1) and a heating device (4) is mounted in the housing (1) and corresponding to a bottom of the roasting drum (B); a feed inlet (2) and a discharge outlet (3) are disposed on preset positions of the housing (1) and corresponding to a front end of the roasting drum (B).

4. The thermal conductive device of the drum roaster as claimed in claim 1, wherein the roasting drum (B) further includes a stirring unit (40); the stirring unit (40) is provided with a driving end (43) disposed on one end of the driving shaft (41), an axially-rotating end (42) arranged at the other end of the driving shaft (41), a plurality of radial fixing members (44) disposed around the driving shaft (41), and a plurality of stirring pieces (45) formed between the adjacent radial fixing members (44); the driving end (43) is axially mounted in the hole (32) of the outer drum (30) and a rear end of each of the radial fixing members (44) is fixed on an inner wall surface of the inner drum (10).

5. The thermal conductive device of the drum roaster as claimed in claim 1, wherein the air-deflecting fins (21) of the thermal conductive unit (20) are straight fins, tilt fins, or spiral fins disposed circumferentially.

6. The thermal conductive device of the drum roaster as claimed in claim 1, wherein a plurality of picking pieces (15) is circumferentially mounted to an inner wall surface of the inner drum (10).
